# EUROPÄISCHE PATENTSCHRIFT

(11) **EP 0 562 242 B1**
(45) Veröffentlichungstag und Bekanntmachung des Hinweises auf die Patenterteilung: **02.01.1997**
(21) Anmeldenummer: 93101551.5
(22) Anmeldetag: 02.02.1993
(51) Int. Cl.: B26B 13/00, H02G 1/12

(54) **Frontschneider**
Front-cutting pliers
Pince coupante devant

(30) Priorität: 24.03.1992 DE 4209530
(43) Veröffentlichungstag der Anmeldung: 29.09.1993
(73) Patentinhaber: Weidmüller Interface GmbH & Co., D-32760 Detmold (DE)
(72) Erfinder: Schmode, Hartmut, W-4933 Blomberg (DE); Weber, Gerd, W-4930 Detmold (DE); Wiebe, Ulrich, W-4926 Dörentrup (DE)
(74) Vertreter: TER MEER - MÜLLER - STEINMEISTER & PARTNER

(56) Entgegenhaltungen:
- DE-C- 3 302 875
- US-A- 4 876 794
- US-A- 5 074 142

## Beschreibung

Die Erfindung betrifft einen Frontschneider gemäß dem Oberbegriff des Patentanspruchs 1.

Aus der US-A-4 876 794 ist bereits ein Frontschneider bekannt, insbesondere zum Durchschneiden von Kabeln, mit zwei aufeinanderliegenden flachen und um eine gemeinsame Drehachse drehbaren Losmessern, die mittels einer Antriebseinrichtung antreibbar sind, wobei jedes Losmesser von einer eigenen In der Messerebene liegenden und mit der Antriebseinrichtung gekoppelten Kurvenscheibe antreibbar ist und jedes Losmesser einen konvexen Bereich aufweist, welcher an der einer Messerschneide des Losmessers abgewandten Seite der Drehachse liegt und gegen den Umfang der Kurvenscheibe drückt.

Ein weiterer Frontschneider ist bereits aus der DE 27 45 114 C2 bekannt. Dieser bekannte Frontschneider, der sich insbesondere zum Durchscheiden von Kabeln eignet, weist zwei aufeinanderliegende flache und um eine gemeinsame Drehachse drehbare Losmesser auf, die mittels einer Antriebseinrichtung antreibbar sind. Die Antriebseinrichtung enthalt einen in einer Laufbuchse angeordneten Kolben, der von einer Druckflüssigkeit beaufschlagt wird. Jedes der Losmesser ist mit dem Kolben über einen Kniehebel gelenkig verbunden.

Aus der DE 33 02 875 C2 ist darüber hinaus eine Schere zum Unterteilen von strangförmigem Schneidgut bekannt. Hier ist nur ein Schermesser als Losmesser ausgebildet, während das andere Schermesser ein Festmesser ist. Das Festmesser ist fest an einem Haltehebel montiert, an dem ein Schwenkhebel angelenkt ist, um das Losmesser mit Hilfe einer Schaltklinke anzutreiben, deren Schaltnase in einen Zahnkranz am Umfang des Losmesser greift. Die Schaltnase kann auch in ein Schaltritzel eingreifen, das seinerseits das Losmesser antreibt.

Der Erfindung liegt die Aufgabe zugrunde, den Frontschneider der eingangs genannten Art so weiterzubilden, daß es einen einfacheren Aufbau aufweist.

Die Lösung dergestellten Aufgabe ist im kennzeichnenden Teil des Patentanspruchs 1 angegeben. Vorteilhafte Ausgestaltungen der Erfindung sind den Unteransprüchen zu entnehmen.

Beim erfindungsgemäßen Frontschneider ist jedes Losmesser von einer eigenen in der Messerebene liegenden und mit der Antriebseinrichtung gekoppelten Kurvenscheibe antreibbar.

Werden die Kurvenscheiben in Drehung versetzt, so lassen sich durch sie die Drehstellungen der jeweiligen Losmesser individuell einstellen, um das Zangenmaul des Frontschneiders öffnen und schließen zu können.

Jedes Losmesser weist einen konvexen Bereich auf, welcher an der einer Messerschneide des Losmesser abgewandten Seite der Drehachse liegt und gegen den Umfang der Kurvenscheibe drückt.

Der konvexe Bereich erstreckt sich also in einer zur Losmesserspitze entgegengesetzten Richtung und liegt am Umfang der Kurvenscheibe an. Eine der Kurvenscheiben kann dabei so gedreht werden, daß ihr Umfangsabschnitt, der den konvexen Bereich des Losmesser berührt, von der Drehachse der Losmesser wegläuft, während die andere Kurvenscheibe so gedreht werden kann, daß ihr Umfangsabschnitt, der den konvexen Bereich des anderen Losmesser berührt, auf die Drehachse der Losmesser zuläuft. Im zuletzt genannten Fall muß aber daraufgeachtet werden, daß zwischen Kurvenscheibe und konvexem Bereich keine Selbsthemmung auftritt. Eine derartige Selbsthemmung läßt sich durch einen genügend flachen Anstieg der Kurvenscheibe verhindern.

Im beschriebenen Fall drehen sich die Kurvenscheiben in derselben Richtung, was vorteilhaft ist, da dann die Antriebseinrichtung einen einfacheren Aufbau aufweisen kann. Die Form der Kurvenscheiben kann so gewählt werden, daß beim Schneidvorgang abhängig von der Stellung der Losmesser ein gewünschter Kraftverlauf erzielt wird.

Beide Kurvenscheiben sind auf einer gemeinsamen Antriebsachse drehschlüssig angeordnet, so daß sich eine Vereinfachung der Antriebseinrichtung ergibt.

Mit der genannten Antriebsachse läßt sich ein Antriebsmechanismus verbinden, der zum Beispiel mit einem Ende der Antriebsachse kuppelbar ist.

Dieser Antriebsmechanismus kann ein von Hand betätigbares Stellrad sein, mit dem sich die Losmesser in eine gewünschte Position bringen lassen, oder aber auch ein Motor, beispielsweise ein Elektromotor, mit dem sich die Losmesser zur Durchführung eines Schneidvorgangs antreiben lassen.

Nach einer noch weiteren Ausgestaltung der Erfindung kann die Anriebseinrichtung ein Antriebszahnrad aufweisen, das auf der Antriebsachse drehschlüssig angeordnet ist. Vorzugsweise kann das Antriebszahnrad zwischen den Kurvenscheiben liegen, um den Aufbau des Frontschneiders möglichst kompakt zu gestalten.

Die Antriebseinrichtung weist nach einer vorteilhaften Weiterbildung der Erfindung eine Antriebsklinke auf, die mit einer Antriebsnase zwischen die Zähne des Antriebszahnrades greift und an einem Schwenkarm angelenkt ist. Durch Betätigen des Schwenkarms lassen sich dann über die Antriebsklinke das Antriebszahnrad und mit ihm die Kurvenscheiben antreiben, so daß eine entsprechende Verstellung der Losmesser erfolgt. Eine an einem Haltearm befestigte Sperrklinke greift federnd zwischen die Zähne des Antriebzahnrades, um eine Rückstellung dieses Zahnrades und damit der Losmesser zu verhindern.

Antriebsnase und Sperrklinke können formschlüssig zwischen die Zähne des Antriebszahnrades eingreifen, um für eine bessere Kraftübertragung bei geringerer Verschleißgefahr zu sorgen.

Ein Ausführungsbeispiel der Erfindung wird nachfolgend unter Bezugnahme auf die Zeichnung näher beschrieben.

Es zeigen:
**Figur 1** eine perspektivische Darstellung des Frontschneiders von hinten bei geöffnetem Gehäuse und
**Figur 2** eine perspektivische Darstellung des Frontschneiders von vorn bei geöffnetem Gehäuse.

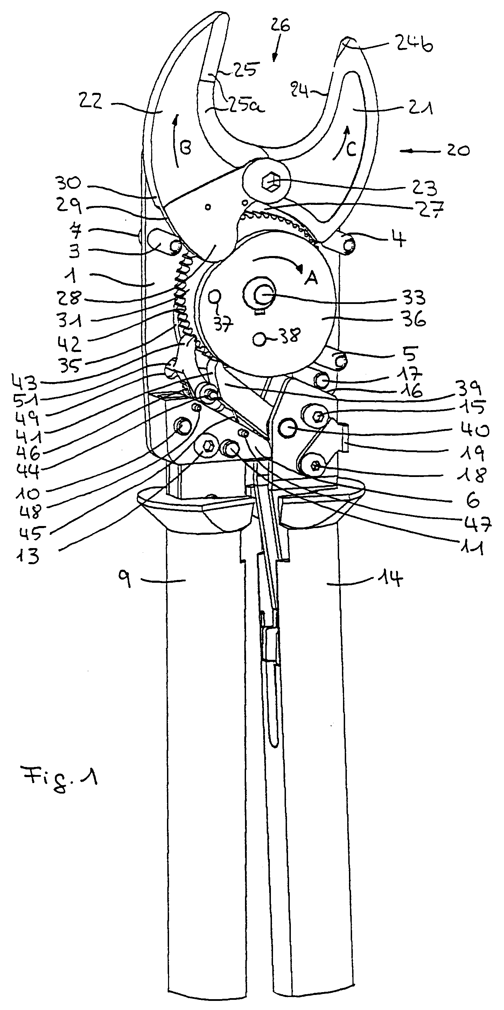

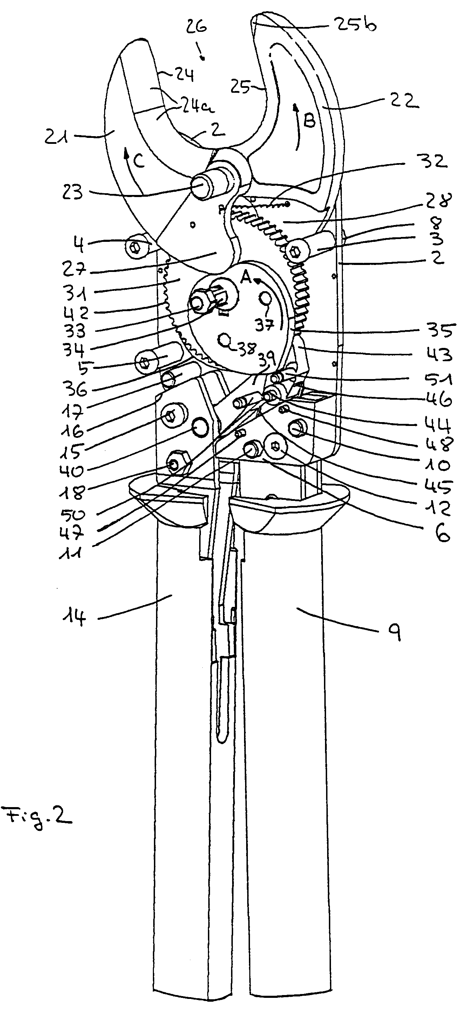

Entsprechend den Fig. 1 und 2 weist der Frontschneider nach der Erfindung eine vordere Gehäuseplatte 1 und eine hintere Gehäuseplatte 2 auf. Beide Gehäuseplatten 1 und 2 sind im wesentlichen rechteckförmig ausgebildet und liegen im Abstand parallel zueinander, wobei sie über Distanzstücke 3, 4, 5 und 6 miteinander verbunden sind. Die Distanzstücke 3, 4, 5 und 6 liegen paarweise im seitlichen Bereich der Gehäuseplatten 1 und 2, wobei die Distanzstücke 3, 4 und 5 als Distanzhülsen mit Innengewinde ausgebildet sind, die beidseitig Schrauben 7, 8 aufnehmen, welche durch Durchgangsöffnungen in den Gehäuseplatten 1, 2 hindurchgeführt sind.

Das Distanzstück 6 befindet sich in einem Eckbereich der Gehäuseplatten 1, 2 und weist eine im wesentlichen dreieckige Form auf, wobei die Hypotenuse nach innen gerichtet ist. Es besitzt U-förmiges Querschnittsprofil und dient zur Aufnahme eines Haltearms 9, der über zwei Befestigungsstifte 10 und 11 formschlüssig mit dem Distanzstück 6 verbunden ist. Die Befestigungsstifte 10 und 11 laufen mit anderen Worten sowohl durch ein oberes Ende des Haltearms 9 als auch durch das Distanzstück 6 hindurch, um beide Teile fest miteinander zu verbinden. Darüber hinaus durchsetzen die Befestigungsstifte 10 und 11 auch beide Gehäuseplatten 1 und 2, um das Distanzstück 6 und damit den Haltearm 9 gegenüber den Gehäuseplatten 1 und 2 zu arretieren. Die axialen Enden der Befestigungsstifte 10 und 11 fluchten mit den Außenseiten der Gehäuseplatten 1 und 2. Zur Befestigung der Gehäuseplatten 1 und 2 im Bereich des Distanzstücks 6 sind an dessen beiden Seiten ferner Gewindebohrungen 12 vorgesehen, die Schrauben 13 aufnehmen, welche durch Durchgangsöffnungen der Gehäuseplatten 1 und 2 hindurchlaufen und diese mit ihrem Schraubenkopf gegen das Distanzstück 6 ziehen. Weist der z. B. aus Stahl bestehende Haltearm 9 ein U-förmiges Profil auf, so kann er in seinem oberen Bereich durch ein innenliegendes Distanzstückverstärkt sein, durch das dann die Elemente 10, 11 und 13 ebenfalls hindurchgeführt sind. Auch die Gewindebohrung 12 kann sich bis in den Bereich des innenliegenden Distanzstücks hinein erstrecken und z. B. als Durchgangsbohrung ausgebildet sein.

Benachbart zum Haltearm 9 liegt ein Schwenkarm 14, der über einen Gelenkbolzen 15 drehbar an den Gehäuseplatten 1 und 2 angelenkt ist. Der Gelenkbolzen 15 läuft senkrecht durch die Gehäuseplatten 1 und 2 hindurch, wobei dessen axiale Stirnflächen mit den Außenseiten der Gehäuseplatten 1 und 2 fluchten. Mit Hilfe einer nicht dargestellten Feder, die wirkungsmäßig zwischen dem Haltearm 9 und dem Schwenkarm 14 liegt, wird der Schwenkarm 14 um den Gelenkbolzen 15 herum vom Haltearm 9 weggedrückt.

Der Schwenkarm 14 weist im Bereich des Gelenkbolzens 15, also in seinem oberen Bereich, ein U-förmiges Querschnittsprofil auf und an seiner oberen Stirnseite eine abgeschrägte Kante 16, mit der er gegen einen Anschlagstift 17 schlägt, wenn er am weitesten gegenüber dem Haltearm 9 verschwenkt worden ist. Mit anderen Worten begrenzt der Anschlagstift 17 die Schwenkbewegung des Schwenkarms 14 vom Haltearm 9 weg. Der Anschlagstift 17 ist in beiden Gehäuseplatten 1 und 2 gelagert.

Am oberen Ende des Schwenkarms 14 befindet sich ferner eine um einen Lagerstift 18 drehbare Sicherungsklinke 19, die in eine entsprechende Ausnehmung der hinteren Gehäuseplatte 2 hineingedreht werden kann, wenn Haltearm 9 und Schwenkarm 14 dicht beieinander liegen, um ein Verschenken des Schwenkarms 14 aufgrund der genannten und zwischen dem Haltearm 9 und dem Schwenkarm 14 liegenden Feder zu verhindern. Der Haltearm 9 und der Schwenkarm 14 sind an ihrem unteren Ende z. B. von Kunststoff umhüllt, um Griffe zu bilden.

Bevor auf den Klinkenantrieb des Frontschneiders näher eingegangen wird, soll zunächst sein Aufbau im oberen Bereich im einzelnen beschrieben werden.

In diesem oberen und vom Haltearm 9 bzw. Schwenkarm 14 entfernten Bereich befindet sich ein Scherkopf 20, der ein vorderes Losmesser 21 und ein hinteres Losmesser 22 aufweist. Beide Losmesser 21 und 22 sind um eine gemeinsame Drehachse 23 drehbar, die endseitig in den Gehäuseplatten 1 und 2 gelagert ist.

Die Losmesser 21 und 22 weisen halbkreisförmig gebogene und aufeinander zuweisende Schneidkanten 24 und 25 auf, die gemeinsam ein Zangenmaul 26 des Frontschneiders bilden. Grob gesagt sind die Losmesser 21 und 22 sichelartig ausgebildet, wobei die Drehachse 23 kurz unterhalb des Zangenmauls 26 zu liegen kommt. Infolge der sichelartigen Ausbildung der Losmesser 21 und 22 erstrecken sich diese aber noch über die Drehachse 23 in Richtung zu den Armen 9 und 14 hinaus, wobei die zu den Armen 9 und 14 weisenden Enden der Losmesser 21 und 22 abgerundet sind und dort konvexe Bereiche 27 und 28 bilden.

Die Fig. 1 zeigt eine Ansicht derjenigen Fläche des hinteren Losmessers 22, an der sich ein Anschliff 25a zur Bildung der Schneidkante 25 befindet. Dagegen zeigt die Fig. 2 eine Ansicht derjenigen Fläche des vorderen Losmessers 21, an der sich einAnschliff 24a zur Bildung der Schneidkante 24 befindet. Die Losmesser 21 und 22 sind scheibenförmig ausgebildet und im Bereich der Schneidkanten 24 und 25 relativ dick, während sie in den konvexen Bereichen 27, 28 dünner sind, wozu ihre Wandflächen entsprechend abgetragen sind, und zwar an den einander gegenüberliegenden bzw. aufeinander zuweisenden Seiten. Dies ist am besten in Fig. 1 zu erkennen, wo im Bereich des Bezugszeichens 29 eine dünnere Wandstärke des Losmessers 22 vorhanden ist als im Bereich des Bezugszeichens 30. Infolge der abgetragenen Wandflächen wird zwischen den konvexen Bereichen 27, 28 ein Hohlraum erhalten, der zur Aufnahme eines Antriebszahnrads 31 dient.

Es sei noch darauf hingewiesen, daß beide Losmesser 21 und 22 mit Hilfe einer Spannfeder 32 vorgespannt sind, und zwar so, daß die Spannfeder 32 versucht, die konvexen Bereiche 27, 28 um die Drehachse 23 herum aufeinander zu zu bewegen.

Das Antriebszahnrad 31 ist drehschlüssig auf einer Antriebsachse 33 angeordnet, deren axiale Enden in den Gehäuseplatten 1 und 2 gelagert sind. Die Antriebsachse 33 ist dabei durch die vordere Gehäuseplatte 1 nach vom hindurchgeführt und weist dort einen Vielkant 34 auf, mit dem ein nicht dargestellter Antriebsmechanismus kuppelbar ist, beispielsweise ein von Hand zu bedienendes Stellrad oder ein Motor, um die Antriebsachse 33 zu drehen. Der Antriebsmechanismus kommt dabei an der Außenseite der vorderen Gehäuseplatte 1 zu liegen.

Auf der Antriebsachse 33 sind ferner zwei Kurvenscheiben angeordnet, und zwar eine vordere Kurvenscheibe 35 und eine hintere Kurvenscheibe 36, von denen jeweils eine an einer Seite des Antriebszahnrads 31 zu liegen kommt. Das Zahnrad 31 und die Kurvenscheiben 35, 36 liegen unmittelbar aufeinander und sind drehschlüssig miteinander verbunden, beispielsweise mit Hilfe von Stiften, die durch gemeinsame Durchgangsöffnungen 37, 38 in den Teilen 31, 35 und 36 hindurchtreten. Wird die Antriebsachse 33 über den Antriebsmechanismus von außen gedreht, so werden die beiden Kurvenscheiben 35 und 36 sowie das Antriebszahnrad 31 in gleicher Richtung mitgenommen. Zwischen ihnen ist keine Relativbewegung vorhanden. Die gesamte axiale Breite von Antriebszahnrad 31, Kurvenscheibe 35 und Kurvenscheibe 36 ist dabei so groß, daß diese Einheit passend zwischen den Gehäuseplatten 1 und 2 zu liegen kommt. Die axiale Breite dieser Einheit stimmt also mit dem Abstand der Gehäuseplatten 1 und 2 voneinander bzw. mit der Länge der Distanzstücke 3, 4, 5 und 6 überein. Dabei lassen sich die Kurvenscheiben aber noch zwischen den Gehäuseplatten 1 und 2 drehen, werden also nicht eingeklemmt.

Wie bereits erwähnt, sind die einander zugewandten Seitenwände der Losmesser in den konvexen Bereichen 27, 28 abgetragen, um einen Hohlraum für die Aufnahme des Antriebszahnrads 31 zu schaffen, an dessen gegenüberliegenden Seiten die konvexen Bereiche 27, 28 in Anlage gebracht werden. In den konvexen Bereichen 27, 28 stimmt die Dicke der Losmesser mit der axialen Dicke der Kurvenscheiben 35, 36 überein. Mit anderen Worten kommen auch die Losmesser 21 und 22 passend zwischen den Gehäuseplatten 1 und 2 zu liegen, und zwar auch dort, wo sich die konvexen Bereiche 27 und 28 befinden. Es sei schon jetzt darauf hingewiesen, daß sich die konvexen Bereiche 27, 28 nicht immer seitlich zum Antriebszahnrad 31 befinden müssen. Dies hängt von der Drehstellung der Losmesser 21, 22 ab, wie noch beschrieben wird.

Die Antriebsachse 33 liegt in Längsrichtung des Frontschneiders gesehen unterhalb der Drehachse 23, wobei die Fig. 1 erkennen läßt, daß der konvexe Bereich 28 des hinteren Losmessers 22 auf den Umfang der hinteren Kurvenscheibe 36 drückt, während nach Fig. 2 der konvexe Bereich 27 des vorderen Losmessers 21 auf den Umfangsbereich der vorderen Kurvenscheibe 35 drückt. Die konvexen Bereiche 27, 28 werden mit Hilfe der bereits erwähnten Spannfeder 32 gegen die Kurvenscheiben 35, 36 geführt. Drehen sich die Kurvenscheiben 35, 36 infolge der Drehung der Antriebsachse 33, die entweder über das Antriebszahnrad 31 oder über den erwähnten Antriebsmechanismus angetrieben werden kann, so werden dabei auch die Losmesser 21, 22 verschwenkt. Dies wird später genauer beschrieben.

Es wurde bereits ausgeführt, daß die Antriebsachse 33 mit Hilfe des genannten Antriebsmechanismus gedreht werden kann, um auf diese Weise die Losmesser 21, 22 zu bewegen. Die Drehung der Antriebsachse 33 kann aber auch über das Antriebszahnrad 31 erfolgen, und zwar mit Hilfe einer Antriebsklinke 39, die durch einen Lagerstift 40 schwenkbar im oberen Bereich des Schwenkarms 14 gelagert ist. Dabei weist die Antriebsklinke 39 eine Antriebsnase 41 auf, die zwischen zwei Zähne 42 des Antriebszahnrads 32 greift. Ihr Eingriffspunkt liegt an der Seite der Antriebsachse 33, an der sich der Haltearm 9 befindet. An dieser Seite greift auch eine Sperrklinke 43 zwischen die Zähne 42 des Antriebszahnrads 31, die an einem Lagerstift 44 drehbar gelagert ist, dessen axiale Enden in den Gehäuseplatten 1 und 2 ruhen. Mit Hilfe von Federn 45 und 46 werden die Antriebsklinke 39 und die Sperrklinke 43 in Richtung zum Antriebszahnrad 31 vorgespannt. Diese Federn 45, 46 stützen sich mit ihrem anderen Ende am Distanzstück 6 ab und sind mittig um Stifte 47, 48 herumgewickelt, die das Distanzstück 6 in seinem U-förmigen Bereich durchsetzen. Die Stifte 47, 48 sind auch in den Gehäuseplatten 1 und 2 gelagert.

In der vorderen Gehäuseplatte 1 befinden sich Öffnungen 49, durch die Stellhebel 50, 51 hindurchgeführt sind, von denen einer seitlich mit der Antriebsklinke 39 und der andere seitlich mit der Sperrklinke 43 verbunden sind. Die Öffnungen 49 sind Langlochöffnungen, so daß bei Bewegung der Stellhebel 50, 51 Antriebsklinke 39 und Sperrklinke 43 gegen die Kraft der Federn 45, 46 vom Antriebszahnrad 31 abgenommen werden können. Sie lassen sich gemeinsam oder getrennt vom Antriebszahnrad 31 abheben, so daß es zur Voreinstellung der Losmesser 21, 22 auch von Hand bewegt werden kann, und zwar über das bereits beschriebene Stellrad.

Nachfolgend wird unter Bezugnahme auf die Fig. 1 und 2 die Funktionsweise des Frontschneiders näher beschrieben.

Befindet sich der Frontschneider in einer in den Fig. 1 und 2 gezeigten Ausgangsstellung, in der die Arme 9 und 14 benachbart zueinander liegen, so wird zunächst die Sicherungsklinke 19 um den Lagerstift 18 in Fig. 1 im Uhrzeigersinn gedreht, und zwar von Hand, um den Schwenkarm 14 freizugeben. Der Schwenkarm 14 wird dann mit Hilfe der nicht dargestellten Feder, die sich zwischen den Armen 9 und 14 befindet, vom Haltearm 9 weggeschwenkt, und zwar um den Gelenkbolzen 15 herum. Dabei bewegt sich auch der Lagerstift 40 auf einer Bahn um den Gelenkbolzen 15 herum, wobei er die Antriebsklinke 39 mitnimmt, deren Antriebsnase 41 daraufhin über die Zähne 42 des Antriebszahnrads 31 hinweggleitet. Die Fig. 1 zeigt, daß in diesem Fall die Mitdrehung des Antriebszahnrads 31 durch die Sperrklinke 43 verhindert wird, die infolge der Kraft der Feder 46 in den Zahnbereich des Antriebszahnrads 31 greift und dieses blockiert. Wird also der Schwenkarm 14 vom Haltearm 9 weggeschwenkt, so erfolgt in Fig. 1 keine Drehung des Antriebszahnrads 31 entgegen dem Uhrzeigersinn, und somit auch keine Drehung der Kurvenscheiben 35 und 36. Die Verschwenkung des Schwenkarms 14 erfolgt soweit, bis seine obere abgeschrägte Kante 16 gegen den Anschlagstift 17 schlägt.

Wird anschließend der Schwenkarm 14 um den Gelenkbolzen 15 herum auf den Haltearm 9 zu gedreht, so drückt er die Antriebsklinke 39 nach vom, die ihrerseits über die Antriebsnase 41 das Antriebszahnrad 31 im Uhrzeigersinn um die Antriebsachse 33 herumdreht. In diesem Fall gleitet lediglich die Sperrklinke 43 über die Zähne 42 des Antriebszahnrads 31 hinweg, ohne dieses zu blockieren. Mit der Drehung des Antriebszahnrads 31 werden auch die Kurvenscheiben 35 und 36 um Uhrzeigersinn in Fig. 1 gedreht. Die Größe des Drehwinkels steht in Übereinstimmung mit dem Verschwenkwinkel des Schwenkarms 14 und gleicht üblicherweise dem Winkelabstand zweier Zähne 42 voneinander.

Dreht sich in Fig. 1 die Kurvenscheibe 36 im Uhrzeigersinn, also in Richtung des Pfeils A, so bewegt sich immer derjenige Abschnitt ihres Umfangsbereichs, auf dem der konvexe Bereich 28 des hinteren Losmessers 22 zu liegen kommt, im wesentlichen auf die Drehachse 23 zu. Mit anderen Worten drückt die hintere Kurvenscheibe 36 das hintere Losmesser 22 über den konvexen Bereich 28 mehr oder weniger weit nach oben und um die Drehachse 23 herum. Die Drehstellung des hinteren Losmessers 22 wird also durch den Radius der Kurvenscheibe 36 bestimmt, der immer so gewählt ist, daß keine Selbsthemmung bzw. Verklemmung von Kurvenscheibe 36 und konvexem Bereich 28 auftreten kann. In Fig. 1 ist das hintere Losmesser 22 am weitesten nach hinten bzw. entgegen der Uhrzeigerrichtung um die Drehachse 23 geschwenkt, da der konvexe Bereich 28 die Kurvenscheibe 36 an einem Umfangsabschnitt berührt, der den geringsten Abstand von der Antriebsachse 33 aufweist. Bei weiterer Drehung der Kurvenscheibe 36 und steigendem Kurvenscheibenradius wird dann das hintere Losmesser 22 in Richtung des Pfeils B gedrückt.

Mit der Drehung der Kurvenscheibe 36 in Fig. 1 in Richtung des Pfeils A wird auch die vordere Kurvenscheibe 35 in Fig. 2 in derselben Drehrichtung mitgenommen, also auch in Richtung des Pfeils A gedreht, der jedoch hier entgegengesetzt eingezeichnet ist, da es sich in Fig. 2 um die Vorderansicht des Frontschneiders handelt.

Auf dem Umfang der vorderen Kurvenscheibe 35 liegt der konvexe Bereich 27 des vorderen Losmessers 21, so daß bei Drehung der vorderen Kurvenscheibe 35 in Richtung des Pfeils A das vordere Losmesser 21 in Fig. 2 im Uhrzeigersinn um die Drehachse 23 herumgedreht wird, wobei dessen Drehstellung wiederum vom Radius der Kurvenscheibe 35 abhängt. In Fig. 2 nimmt das vordere Losmesser 21 seine am weitesten nach unten verschwenkte Position ein, da der konvexe Bereich 27 dort auf der vorderen Kurvenscheibe 35 zu liegen kommt, wo diese ihren kleinsten Radius aufweist. Wird ausgehend davon die vordere Kurvenscheibe 35 in Richtung des Pfeils A gedreht, so drückt sie das vordere Losmesser 21 über den konvexen Bereich 27 in Richtung des Pfeils C, um das Zangenmaul 26 zu schließen, da gleichzeitig das hintere Losmesser 22 durch die hintere Kurvenscheibe 36 in Richtung des Pfeils B gedrückt wird. Um dies zu erreichen, sind die Drehstellungen der Kurvenscheiben 35 und 36 relativ zum Antriebszahnrad 31 von Anfang an fest gewählt.

Um zu verhindern, daß sich bei dickeren Querschnitten des zu zerschneidenden Gutes die Spitzen der Schneidkanten 24, 25 kreuzen, weisen diese an den den Anschliffen 24a und 25a gegenüberliegenden Seitenflächen Abschrägungen 24b, 25b auf. Sie dienen praktisch zur Führung der Losmesserspitzen, wenn diese beginnen, sich zu überlappen.

Werden die Antriebsklinke 39 und die Sperrklinke 43 über die Stellhebel 50, 51 aus dem Zahnbereich des Antriebszahnrads 31 herausgedreht, so kann die aus Kurvenscheibe 35, Antriebszahnrad 31 und Kurvenscheibe 36 bestehende Einheit auch von Hand gedreht werden, und zwar über ein auf dem Vielkant 34 sitzendes Handrad, um das Zangenmaul 26 bei Drehung des Handrads in gewünschter Weise öffnen und schließen zu können.

Durch die Radien der Kurvenscheiben lassen sich die Verschenkwinkel der Losmesser 21 und 22 voreinstellen, um auf diese Weise bei aufeinanderfolgenden Drehstellungen des Antriebszahnrads 31 vorbestimmte Schneidkräfte zu erzeugen. Ein strangförmiges Gut läßt sich dann mit einem gewünschten und drehstellungsabhängigen Kraftverlauf zerschneiden, was insbesondere bei Kabeln vorteilhaft ist, die eine relativ weiche Isolierung und einen härteren Kern aufweisen. Die Radien der Kurvenscheiben können dabei so gewählt sein, daß zunächst bei gleichen Winkelschritten des Antriebszahnrads 31 das Zangenmaul schneller geschlossen wird, da lediglich eine weiche Isolation zerschnitten zu werden braucht, während anschließend pro Winkelschritt des Antriebszahnrads 31 eine langsamere Bewegung der Losmesser 21, 22 erfolgt, da jetzt der harte Kabelkern zerschnitten wird. Insbesondere eignet sich der Frontschneider auch zum Zerschneiden von in Ecken verlegten Kabeln, da er nur eine geringe bauliche Breite aufweist. Der Frontschneider kann im stirnseitigen Bereich des Antriebszahnrads 31 und der Kurvenscheiben 35, 36 auch abgedichtet sein, um einen Schutz gegen Verschmutzung des Getriebes zu erhalten. Hierzu können sich zwischen den Gehäuseplatten 1, 2 seitliche Wandbereiche befinden, beispielsweise zwischen den Distanzstücken 4, 5 einerseits sowie 3, 6 andererseits.

## Patentansprüche

1. Frontschneider, insbesondere zum Durchschneiden von Kabeln, mit zwei aufeinanderliegenden flachen und um eine gemeinsame Drehachse (23) drehbaren Losmessern (21, 22, die mittels einer Antriebseinrichtung (31, 33, 39) antreibbar sind, wobei jedes Losmesser (21, 22) von einer eigenen in der Messerebene liegenden und mit der Antriebseinrichtung (31, 33, 39) gekoppelten Kurvenscheibe (35, 36) antreibbar ist und
jedes Losmesser (21, 22) einen konvexen Bereich (27, 28) aufweist, welcher an der einer Messerschneide (24, 25) des Losmessers (21, 22) abgewandten Seite der Drehachse (23) liegt und gegen den Umfang der Kurvenscheibe (35 36) drückt,
**dadurch gekennzeichnet**, daß beide Kurvenscheiben (35, 36) auf einer gemeinsamen Antriebsachse (33) drehschlüssig angeordnet sind.

2. Frontschneider nach Anspruch 1, **dadurch gekennzeichnet**, daß die Antriebseinrichtung (31, 33, 39) ein Antriebszahnrad (31) aufweist, das auf der Antriebsachse (33) drehschlüssig angeordnet ist.

3. Frontschneider nach Anspruch 2, **dadurch gekennzeichnet**, daß das Antriebszahnrad (31) zwischen den Kurvenscheiben (35, 36) liegt.

4. Frontschneider nach Anspruch 2 oder 3, **dadurch gekennzeichnet**, daß die Antriebseinrichtung (31, 33, 39) eine Antriebsklinke (39) aufweist, die mit einer Antriebsnase (41) zwischen die Zähne (42) des Antriebszahnrades (31) greift und an einem Schwenkarm (14) angelenkt ist.

5. Frontschneider nach Anspruch 4, **dadurch gekennzeichnet**, daß die Antriebsnase (41) formschlüssig in den Zwischenzahnbereich des Antriebszahnrades (31) eingreift.

6. Frontschneider nach einem der Ansprüche 2 bis 5, **dadurch gekennzeichnet**, daß eine an einem Haltearm (9) befestigte Sperrklinke (43) federnd zwischen die Zähne (42) des Antriebszahnrades (31) greift.

7. Frontschneider nach einem der Ansprüche 1 bis 6, **dadurch gekennzeichnet**, daß ein Antriebsmechanismus mit einem Ende der Antriebsachse (33) kuppelbar ist.

8. Frontschneider nach Anspruch 7, **dadurch gekennzeichnet**, daß der Antriebsmechanismus ein Stellrad ist.

9. Frontschneider nach Anspruch 7, **dadurch gekennzeichnet**, daß der Antriebsmechanismus ein Motor ist.

## Claims

1. End, cutters, especially for cutting through cables, having two flat loose blades (21, 22) which are located one on top of the other, can rotate about a common rotation shaft (23) and can be driven by means of a drive device (31, 33, 39), whereby each loose blade (21, 22) can be driven by a dedicated cam disc (35, 36) which is located in the plane of the blade and is coupled to the drive device (31, 33, 39), and
each loose blade (21, 22) has a convex region (27, 28) which is located on the side of the rotation shaft (23) facing away from a cutter blade (24, 25) of the loose blade (21, 22) and presses against the circumference of the cam disc (35, 36),
characterised in that both cam discs (35, 36) are arranged in a rotationally locked manner on a common drive shaft (33).

2. End cutters according to Claim 1, characterised in that, the drive device (31, 33, 39) has a drive gearwheel (31) which is arranged on the drive shaft (33) in a rotationally locked manner.

3. End cutters according to Claim 2, characterised in that the drive gearwheel (31) is located between the cam discs (35, 36).

4. End cutters according to Claim 2 or 3, characterised in that the drive device (31, 33, 39) has a drive latch (39) which engages with a drive pawl (41) between the teeth (42) of the drive gearwheel (31) and is articulated on a pivoting arm (14).

5. End cutters according to Claim 4, characterised in that the drive pawl (41) engages in a positively-locking manner in the intermediate toothed region of the drive gearwheel (31).

6. End cutters according to one of Claims 2 to 5, characterised in that a blocking latch (43) which is attached to a retaining arm (9) engages in a sprung manner between the teeth (42) of the drive gearwheel (31).

7. End cutters according to one of Claims 1 to 6, characterised in that a drive mechanism can be coupled to one end of the drive shaft (33).

8. End cutters according to Claim 7, characterised in that the drive mechanism is a control wheel.

9. End cutters according to Claim 7, characterised in that the drive mechanism is a motor.

## Revendications

1. Pince coupante frontale, en particulier pour couper des câbles, comportant deux couteaux séparés (21, 22) plats et disposés l'une au-dessus de l'autre et susceptibles de tourner autour d'un axe de rotation commun (23), ces couteaux étant susceptibles et être entraînés au moyen d'un organe d'entraînement (31, 33, 3), dans laquelle chaque lame mobile (21, 22) est susceptible d'être entraînée par un disque de came (35, 38) propre, disposé dans le plan du couteau et couplé à l'organe d'entraînement (31, 33, 39), et chaque couteau séparé (21, 22) présente une zone (27, 28) convexe, qui est située du côté de l'axe de rotation (23), qui est opposé à un tranchant (24, 25) du couteau séparé (21, 22), et vient presser contre la périphérie du disque de came (35, 36), caractérisée en ce que les deux disques de came (35, 36) sont disposés sur un axe d'entraînement (33) commun, en étant liés en rotation.

2. Pince coupante frontale selon la revendication 1, caractérisée en ce que l'organe d'entraînement (31, 33, 39) présente une roue dentée d'entraînement (31) montée assujettie en rotation sur l'axe d'entraînement (33).

3. Pince coupante frontale selon la revendication 2, caractérisée en ce que la roue dentée d'entraînement (31) est placée entre les disques de came (35, 36).

4. Pince coupante frontale selon la revendication 2 ou 3, caractérisée en ce que l'organe d'entraînement (31, 33, 39) présente un cliquet d'entraînement (39) s'engageant, par un ergot d'entraînement (41), entre les dents (42) de la roue dentée d'entraînement (31) et étant articulé à un bras pivotant (14).

5. Pince coupante frontale selon la revendication 4, caractérisée en ce que l'ergot d'entraînement (42) s'engage avec ajustement de forme dans la zone d'entredents de la roue dentée d'entraînement (31).

6. Pince coupante frontale selon l'une des revendications 2 à 5, caractérisée en ce qu'un cliquet de blocage (43), fixé à un bras de maintien (9), s'engage élastiquement entre les dents (42) de la roue dentée (31).

7. Pince coupante frontale selon l'une des revendications 1 à 6, caractérisée en ce qu'un mécanisme d'entraînement est susceptible d'être accouplé à une extrémité de l'axe d'entraînement (33).

8. Pince coupante frontale selon la revendication 7, caractérisée en ce que le mécanisme d'entraînement est une roue de réglage.

9. Pince coupante frontale selon la revendication 7, caractérisée en ce que le mécanisme d'entraînement est un moteur.
